Europäisches Patentamt

European Patent Office

Office européen des brevets

(11) Publication number: **0 520 575 A1**

# EUROPEAN PATENT APPLICATION

(21) Application number: **92201853.6**

(22) Date of filing: **23.06.92**

(51) Int. Cl.⁵: **A01C 23/00**, **B62D 21/04**, **B62D 13/04**, **B60P 3/22**

(30) Priority: **25.06.91 NL 9101105**

(43) Date of publication of application:
**30.12.92 Bulletin 92/53**

(84) Designated Contracting States:
**BE DE FR GB IT NL**

(71) Applicant: **PEETERS LANDBOUWMACHINES B.V.**
**Blokenstraat 3**
**NL-4885 JH Achtmaal(NL)**

(72) Inventor: **Peeters, Petrus Cornelius Adrianus**
**Blokenstraat 3**
**NL-4885 JH Achtmaal(NL)**
Inventor: **Peeters, Daniel Petrus Marie**
**Blokenstraat 3**
**NL-4885 JH Achtmaal(NL)**

(74) Representative: **Eveleens Maarse, Pieter et al**
**Arnold & Siedsma Sweelinckplein 1**
**NL-2517 GK The Hague(NL)**

(54) Trailer for transporting and applying liquid manure.

(57) The present invention relates to a trailer for transporting and applying liquid manure, comprising: a chassis, a tank fixed onto the chassis, a drawbar connected to the chassis for attaching the trailer to a tractive vehicle, wheels fixed to the chassis, and means for spreading the liquid manure carried in the tank, wherein the tyres of the wheels are relatively wide and wherein the chassis is formed by a box girder.

As a result of this step it is possible to design the trailer such that the width is less than three metres and the trailer may be transported on public roads.

Owing to the use of wide tyres the damage caused to meadowland or arable land also remains small.

According to a preferred embodiment the trailer comprises two shafts which can both be forcibly steered.

FIG.1

The present invention relates to a trailer for transporting and applying liquid manure, comprising:

- a chassis;
- a tank fixed onto the chassis;
- a drawbar connected to the chassis for attaching the trailer to a tractive vehicle;
- wheels fixed to the chassis; and
- means for applying the liquid manure carried in the tank.

Such trailers are generally known. Such trailers are in general provided with relatively narrow tyres to keep the width of the vehicle within the legal limits. If such a vehicle is to be allowed for road transport, the maximum width of such a vehicle is then limited to three metres.

When such a vehicle is used on the land for applying manure, the pressure exerted by the tyres will be quite high so that there is a real danger of the meadowland over which the manure is applied with this known trailer being destroyed. When this known trailer is driven over arable land the ground is so strongly compacted that without further working it is afterward not suitable for sowing or planting.

The object of the present invention is to provide such a trailer which, when used on the land, does not destroy the land but which is still also suitable for transport on public roads.

This object is achieved in that the tyres of the wheels are relatively wide and in that the chassis is formed by a box girder.

As a result of this step the pressure of the tyres exerted on the land by the tyres remains limited to a value such that only minimal damage is caused, while the use of a narrow chassis in the form of a box girder enables placing of the wheels so close to each other that the maximum allowable width is not exceeded.

This will generally result in there not being sufficient space between the wheels to provide room for a tank of sufficient capacity. According to a preferred embodiment the tank is provided for this purpose with housings providing space for the wheels.

According to a second embodiment the trailer is provided with at least two shafts and a steering device is arranged for controlling the angular position of at least two wheels.

When a trailer is required for a large quantity of liquid manure, the maximum mass for transporting becomes so large that it becomes necessary to employ more than one shaft.

The present invention therefore provides a steerability for at least one of the shafts so that during travel through bends over the land the ground is damaged as little as possible.

It will be apparent that this construction breaks with a tradition because the combination of steerable shafts and wide tyres is wholly novel for a vehicle that must also be able to travel on public roads. The space between the tyres is reduced due to the steerability such that special steps are necessary. In the present invention these problems are solved by providing a narrow box girder as chassis to which all components are attached.

The present invention will subsequently be elucidated with reference to the annexed drawings, in which:

fig. 1 shows a partly broken away perspective view of a trailer according to the present invention;

fig. 2 is a schematic top view of the chassis of the trailer according to the present invention;

fig. 3 is a detail view of the fixing of the drawbar to the chassis of the trailer; and

fig. 4 shows a perspective view of the rear of the trailer and the injection device attached thereto.

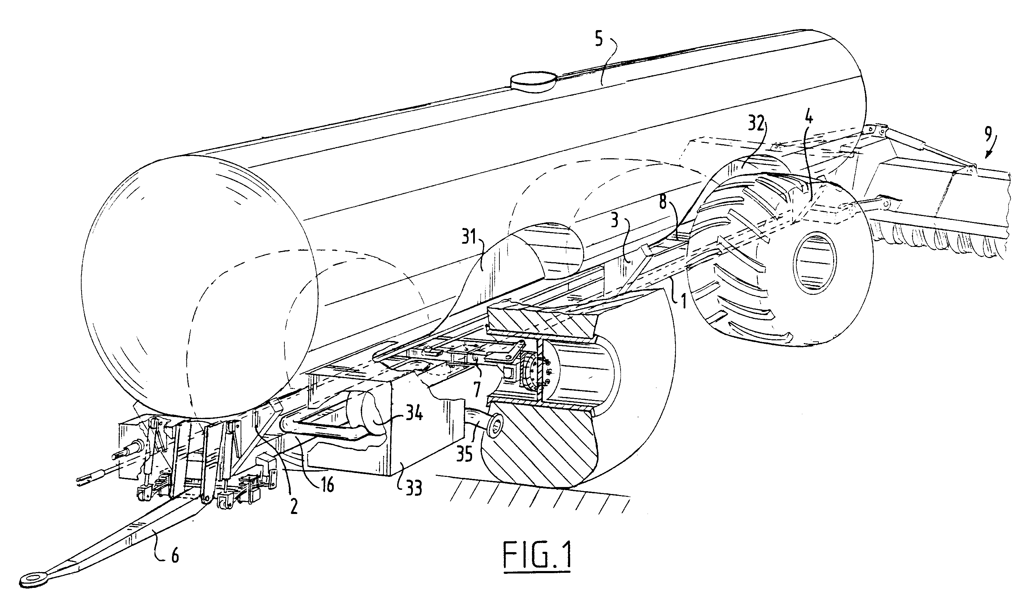

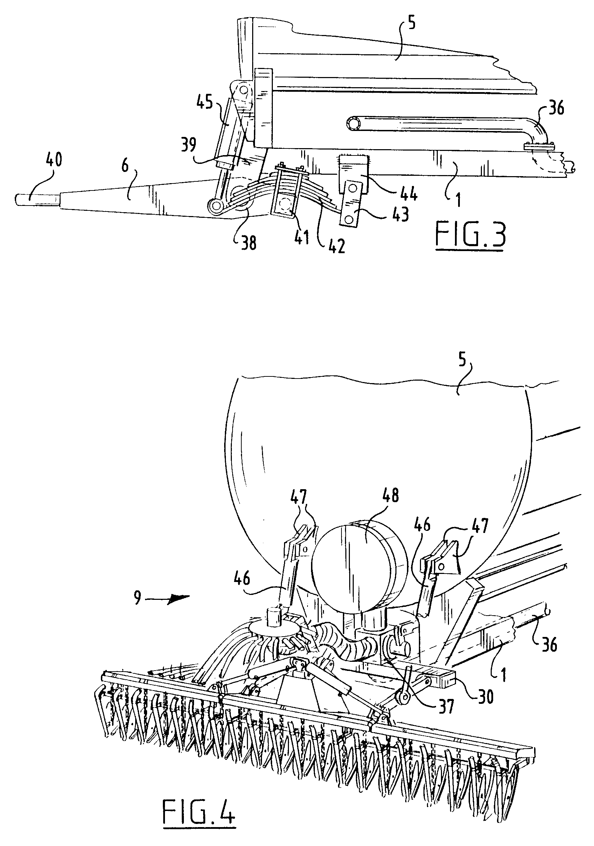

The trailer depicted in fig. 1 is formed by a box girder 1 which forms the chassis of the trailer. A tank 5 is fixed onto the chassis by means of supports 2, 3, 4. A draw-bar 6 is further attached to the box girder 1, wherein the precise attachment will be further explained with reference to fig. 3.

Further attached to the box girder 1 are two shafts 7, 8, wherein the shafts extend substantially above the beam 2. An injection device 9 is fixed to the rear of the box girder 1.

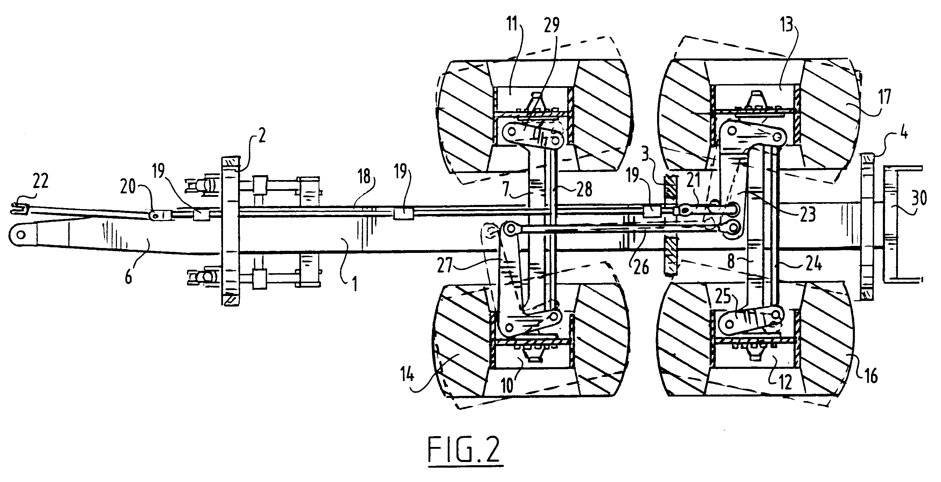

The construction of the chassis will first be discussed with reference to fig. 2.

As stated above, two shafts 7, 8 are fixed to the box girder 1. Fixed onto each of the shafts 7, 8 is a pair of wheels 10, 11 and 12, 13 respectively. Fitted on each of the wheels 10, 11, 12, 13 is a tyre 14, 15, 16, 17. Each of the tyres has a width that is greater than 1 metre, for instance 1.05 metre or 1.10 metre. In general the tyres will have a width greater than half the diameter. The tyres are moreover wider than one third the width of the whole trailer.

The wheels are each mounted in a bearing (not shown in the drawings) which can be adjusted in axial direction by means of levers. A forced steering device is present for this purpose which is formed by a steering rod 18 which is fastened to the box girder 1 and held fixedly for movement in lengthwise direction inside guides 19 which are fixed onto the box girder 1. The steering rod 18 is provided with two hinges 20, 21. The leading end of the steering rod is provided with a fastening member 22 adapted for attachment to a tractive vehicle, for instance a tractor. When the drawbar 6 and therewith the box girder 1 are displaced in rotational sense relative to the tractor because the combination of tractor and trailer goes through a bend, the steering rod 18 will be moved in lengthwise direction. The rear end of steering rod 18 is fastened to an elbow-shaped lever 23 which determines the radial adjustment of the wheel 13. The other end of the elbow-shaped lever 13 is connected by means of a coupling rod 24 to the steering lever 25 which defines the radial adjustment of the wheel 12.

Further fastened to the same end of the elbow-shaped steering lever 23 as that to which the steering rod 18 is fastened is an auxiliary steering rod 26, the other end of which is connected to a second elbow-shaped steering lever 27. To the other end of the second elbow-shaped steering lever 27 is fastened a second coupling rod 28, the other end of which is fastened to a second steering lever 29. The radial position of the wheels 10, 11, 12, 13 is thus adjusted by means of the steering mechanism formed by the components with the reference numerals 18-29.

Instead of the mechanical steering device shown it is also possible to employ an hydraulic or other steering device.

It will be apparent herein that in order to provide space for the wheels and the associated wide tyres when they are at maximum deflection, the box girder 1 is narrow. Insufficient space would otherwise be available for this purpose.

Contrariwise, it is also possible to give the bearing chassis a broader form and to make it narrower it at the position of the wheels.

Further arranged on the rear of the box girder 1 is a mounting device 30 for attaching a manure spreading device.

It can otherwise be seen in fig. 1 that, at the position of each of the wheels, recesses or housings 31 and 32 are arranged in the tank, which for the main part has a round cross section. Corresponding recesses or housings are of course arranged on the other side of the tank although these are not shown in the drawing.

A housing 33 is further arranged on the box girder 1, wherein the housing 33 is arranged partially under the tank 5. Arranged in housing 33 is a pump 34, wherein a connecting pipe 35 also leads to the pump 34. A pipe 36 further extends from the pump 34 over the middle of box girder 1, wherein this pipe 36 extends through box girder 1 at the position of the shafts and the wheels. There is no space for such a pipe above the box girder due to the presence of shafts and the diverse rods forming part of the steering device. The pipe debouches at the rear into a three-way valve 37 as shown in fig. 4.

The attachment of the drawbar will now be described with reference to fig. 3. The drawbar 6 is fixed rotatably by means of a shaft 38 to a bracket 39 fixedly connected to the box girder 1. Fixed on the leading side of drawbar 6 is a pulling eye 40.

The rear end of drawbar 6 is fixed to a cross beam 41 which is connected to the middle of two sets of leaf springs 42, each arranged on either side of the box girder 1. The rear part of the set of leaf springs 42 is connected by means of a shackle 43 to a weld plate 44 fixed to the side of box girder 1, while the front part of each of the sets of leaf springs is connected to the bracket 39 by means of an hydraulic cylinder 45. Thus results a resilient connection between the drawbar 6 and box girder 1, which is desired owing to lack of spring mounting between the shafts 7, 8 and box girder 1. It is further possible to adjust the height of the drawbar 6, and therewith the pulling eye 40, by means of the hydraulic cylinder 45 so that it can be adapted to the height of the tow hook of the tractive vehicle.

An injection device 9 is further arranged on the rear of the trailer, as shown in fig. 4. This injection device is fixed to the bracket 30, while the injection device 9 is further connected by means of two hydraulic cylinders 46 to lugs 47 fixed on the tank 5. It is possible to adjust the height of the injection device by means of the hydraulic cylinders 46. It can be placed herewith into the operational position, wherein a part of the device is situated in the ground. The device can also be moved upward to the inactive position. The injection device does not otherwise form part of the subject-matter of the present application and is therefore not discussed further. It should be noted here that it is possible to use another manure spreading device instead of the injection device shown here.

Finally, a three-way valve 37 is arranged on top of the fixing bracket 30, wherein one outlet conduit of the three-way valve 37 leads to the injection device 9, while the other outlet conduit leads to a stump-shaped cover 48 formed on the rear of the tank 5. It is thus possible to cause liquid manure coming from the pump to flow to the tank by means of the three-way valve, which is used when the tank is filled, and to feed the manure from the tank via the pump, the conduit 36, the three-way valve 37 to the injection device 9.

Although the above embodiment relates to a two-shaft trailer the invention can also be utilized on a single-shaft or three-shaft trailer. Even in the case of a single-shaft trailer the shaft can be embodied steerably, and in the case of a three-shaft trailer this is self-evident.

## Claims

1.  Trailer for transporting and applying liquid manure, comprising:
    - a chassis;
    - a tank fixed onto the chassis;
    - a drawbar connected to the chassis for attaching the trailer to a tractive vehicle;

- wheels fixed to the chassis; and
- means for spreading the liquid manure carried in the tank, **characterized in that** the tyres of the wheels are relatively wide and that the chassis is formed by a box girder.

2. Trailer as claimed in claim 1, **characterized in that** the tyres are wider than 1 metre.

3. Trailer as claimed in claim 1 or 2, **characterized in that** the tyres have a width greater than half the height of the tyres.

4. Trailer as claimed in claim 1, 2 or 3, **characterized in that** the tyres are wider than a third part of the full width of the trailer.

5. Trailer as claimed in any of the claims 1-5, **characterized in that** the tank is provided with housings at the position of the wheels.

6. Trailer as claimed in any of the claims 1-5, **characterized in that** the trailer is provided with at least two shafts and a steering device is arranged for controlling the angular position of at least two wheels.

7. Trailer as claimed in claim 5 or 6, **characterized in that** the wheels can be forcibly steered mechanically or hydraulically by the angular position of the drawbar relative to the tractive vehicle.

8. Trailer as claimed in claim 7, **characterized in that** the trailer comprises two shafts and that the wheels fixed to different shafts are steered in opposing direction.

9. Trailer as claimed in claim 7, **characterized in that** the trailer comprises three shafts and that the leading and rear shaft are steered in opposing direction.

10. Trailer as claimed in claims 5-9, **characterized in that** a pipe running from the front part of the trailer to the rear side of the trailer is guided through the box girder at the position of the wheel shafts.

11. Trailer as claimed in any of the foregoing claims, **characterized in that** the wheel shafts are not spring-mounted and that the drawbar is fastened spring-mounted to the chassis.

12. Trailer as claimed in any of the claims 4-11, **characterized in that** the vertical angular position of the drawbar is adjustable in relation to the chassis.

13. Trailer as claimed in claims 11 and 12, **characterized in that** the drawbar is fixed to a set of leaf springs that is height-adjustable at one of its ends by means of an hydraulic cylinder.

14. Trailer as claimed in any of the foregoing claims, **characterized in that** an injector is fixed to the frame behind the tank for injecting into the ground the liquid manure carried in the tank.

15. Trailer as claimed in any of the claims 1-13, **characterized in that** a manure spreader is fixed to the frame behind the tank.

FIG.1

FIG.2

EP 0 520 575 A1

FIG.3

FIG.4

7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-3 450 223 (JONES) | 1 | A01C23/00 |
| A | * column 2, line 36 - column 4, line 14; figures 1-6 * | 2,3,15 | B62D21/04 B62D13/04 B60P3/22 |
| Y | FR-A-2 095 070 (SOUCHET) | 1 | |
| A | * the whole document * | 12 | |
| A | US-A-3 612 555 (BAKER) * the whole document * | 5 | |
| A | US-A-4 982 976 (KRAMER) * column 12, line 4 - column 19, line 38; figures 1-16 * | 6,7,8,9 | |
| A | US-A-4 248 561 (GRAVES) * column 3, line 23 - column 7, line 37; figures 1-11 * | 1,12,13 | |
| A | EP-A-0 322 941 (DODEWAARD) * column 2, line 19 - column 4, line 5; figures 1-6 * | 1,14 | |

TECHNICAL FIELDS
SEARCHED (Int. Cl.5 )

A01C
B62D
B60P

The present search report has been drawn up for all claims

| Place of search | Date of completion of the search | Examiner |
|---|---|---|
| THE HAGUE | 14 OCTOBER 1992 | VERMANDER R.H. |